**Europäisches Patentamt**

**European Patent Office**

**Office européen des brevets**

(19)

(11) Veröffentlichungsnummer: **0 099 993**
**A1**

(12) # EUROPÄISCHE PATENTANMELDUNG

(21) Anmeldenummer: **83106307.8**

(22) Anmeldetag: **29.06.83**

(51) Int. Cl.³: **H 01 B 13/00**, B 29 H 5/28, G 01 J 5/02

(30) Priorität: **24.07.82 DE 3227799**

(43) Veröffentlichungstag der Anmeldung: **08.02.84**
**Patentblatt 84/6**

(84) Benannte Vertragsstaaten: **CH DE FR GB LI SE**

(71) Anmelder: **Maschinenbau Scholz GmbH & Co. KG,
Heinrichstrasse 1-4, D-4420 Coesfeld (DE)**

(72) Erfinder: **Sikora, Harald, Griesborner Strasse 37,
D-2800 Bremen 44 (DE)**

(74) Vertreter: **Dipl.-Ing. H. Hauck Dipl.-Phys. W. Schmitz
Dipl.-Ing. E. Graalfs Dipl.-Ing. W. Wehnert Dr.-Ing. W.
Döring, Neuer Wall 41, D-2000 Hamburg 36 (DE)**

(54) **Vorrichtung zum Trockenvernetzen von Kabeln oder dergleichen.**

(57) Vorrichtung zum Trockenvernetzen von Kabeln oder
dergleichen, in der das Kabel nach dem Umpresen des
Isolationsmaterials durch mehrere von getrennten Wärmequellen beheizbaren Heizzonen mittels einer Vorschubvorrichtung hindurchbewegt wird, die in einer länglichen rohrförmigen mit Inertgas gefüllten Atmosphäre gebildet sind
und die Temperatur in den Heizzonen mittels einer Steueranordnung veränderbar ist, wobei mindestens einer Heizzone eine Temperaturmeßvorrichtung zugeordnet ist, die
die Oberflächentemperatur des Kabels mißt und die Steueranordnung einen Regler enthält, der die Wärmezufuhr zur
Heizzone verändert, wenn die Oberflächentemperatur von
einer vorgegebenen Solltemperatur abweicht.

31 273-19

PATENTANWÄLTE
DR.-ING. H. NEGENDANK (-1973)

HAUCK, SCHMITZ, GRAALFS, WEHNERT, DÖRING

HAMBURG    MÜNCHEN    DÜSSELDORF

PATENTANWÄLTE · NEUER WALL 41 · 2000 HAMBURG 36

Dipl.-Phys. W. SCHMITZ · Dipl.-Ing. E. GRAALFS
Neuer Wall 41 · 2000 Hamburg 36
Telefon + Telecopier (040) 36 67 55
Telex 02 11 769 inpat d

Dipl.-Ing. H. HAUCK - Dipl.-Ing. W. WEHNERT
Mozartstraße 23 · 8000 München 2
Telefon + Telecopier (089) 53 92 36
Telex 05 216 553 pamu d

Dr.-Ing. W. DÖRING
K.-Wilhelm-Ring 41 · 4000 Düsseldorf 11
Telefon (02 11) 57 50 27

Maschinenbau
Scholz GmbH & Co. KG

4420 Coesfeld

ZUSTELLUNGSANSCHRIFT / PLEASE REPLY TO:    HAMBURG,    28. Juni 1983

Vorrichtung zum Trockenvernetzen von Kabeln

oder dergleichen

Die Erfindung bezieht sich auf eine Vorrichtung zum Trockenvernetzen von Kabeln oder dergleichen, in der das Kabel nach
dem Umpressen des Isolationsmaterials durch mehrere von
getrennten Wärmequellen beheizte Heizzonen mittels einer Vorschubvorrichtung hindurchbewegt wird, die in einer länglichen
rohrförmigen mit Inertgas gefüllten Atmosphäre gebildet sind,
und die Temperatur in den Heizzonen mittels einer Steueranordnung
veränderbar ist.

Bei der bekannten kontinuierlichen Trockenvernetzung von
Kabeln in sogenannten Kettenlinien wird das Kabel mit dem
unvernetzten Isolationsmaterial durch einzelne Heizzonen

.../2

- 2 -

hindurchbewegt. Eine vorgegebene Temperatur in den Heizzonen
bewerkstelligt die Trockenvernetzung. Aus Gründen einwandfreier
Vernetzung wird angestrebt, daß die erforderliche Temperatur
des Isolationsmaterials schnell erreicht wird, ohne daß eine
kritische Höchsttemperatur überschritten wird.

Die Beheizung erfolgt normalerweise auf elektrischem Wege von außen
so daß sich zunächst die äußeren Materialschichten und nach
und nach auch die inneren Schichten auf die erforderliche
Temperatur aufheizen lassen. Um bleibende Schäden des Isoliermaterials zu vermeiden und gleichzeitig eine schnelle Durchwärmung der Isolation bis an die Oberfläche des innen liegenden
Leiters zu erhalten, soll die Temperatur an der Oberfläche der
Isolation möglichst auf zum Beispiel 250°C erwärmt werden,
während das Kabel die einzelnen Heizzonen (Vernetzungsstrecke)
der Kettenlinie durchläuft. Erst wenn die Isolation auch in
Leiternähe einen Wert von zum Beispiel 180°C erreicht hat,
ist die Vernetzung abgeschlossen.

Die genannten Bedingungen erfordern daher längs der Vernetzungsstrecke ein bestimmtes Temperaturprofil. Bei den
meisten der eingesetzten Trockenvernetzungsanlagen wird die
Steuerung der Temperaturzone aufgrund empirischer Werte durchgeführt, indem für die einzelnen Heizzonen bei einer vorgegebenen Vorschubgeschwindigkeit bestimmte Temperaturen vorgegeben werden. Es ist jedoch auch bekannt, Temperaturen mit

- 3 -

Hilfe von Rechnerprogrammen vorzugeben. Mit den Kabeltypen
und unterschiedlichen Produktionsgeschwindigkeiten als Parameter wird ein bestimmtes Temperaturprofil rechnerisch
vorausbestimmt.

Empirisch oder rechnerisch ermittelte Temperaturen erlauben
naturgemäß keine Rückmeldung der tatsächlich im Isoliermaterial
des Kabels erreichten Temperatur. Verschiedene Einflüsse, die
sich im Laufe der Zeit ändern können, beeinflussen in mehr oder
weniger starkem Maße die tatsächliche Aufheizung des Isoliermantels.

Die Aufheizung bei Anlagen der beschriebenen Art erfolgt
normalerweise auf elektrischem Wege in Form von Wärmestrahlung.
**Die abgestrahlte Wärmemenge unterliegt indessen stark schwankenden**
Einflüssen, weil die Heizzonen der Kettenlinie an der Innenseite während der Vernetzung im Laufe der Zeit zunehmend
verschmutzen. Dieser Schmutz, der von Spaltprodukten aus dem
Isolationsmaterial herrührt, hat eine Veränderung des Emissionsfaktors der Heizzonen und damit deren wirksame Wärmeabgabe zur
Folge. Gleichzeitig bewirkt die Schmutzschicht, die bis zu
mehreren Millimetern betragen kann, eine Wärmeisolation von
unbekannter Größe.

Der Erfindung liegt die Aufgabe zugrunde, eine Vorrichtung
zum Trockenvernetzen von Kabeln oder dergleichen zu schaffen, in der unabhängig von schwankenden thermischen Einflüssen in den Heizzonen ein gewünschter thermischer Verlauf der Temperatur im Isolationsmaterial gewährleistet ist.

Diese Aufgabe wird erfindungsgemäß dadurch gelöst, daß mindestens einer Heizzone eine Temperaturmeßvorrichtung zugeordnet ist, die die Oberflächentemperatur des Kabels mißt und die Steueranordnung einen Regler enthält, der die Wärmezufuhr zur Heizzone verändert, wenn die Oberflächentemperatur von einer vorgegebenen Solltemperatur abweicht.

Die Erfindung geht von der Erkenntnis aus, daß die Bestimmung der Oberflächentemperatur der Isolation ausreicht, um Rückschlüsse auf den Temperaturverlauf über den Radius des Isolationsmantels, also von der Leiteroberfläche bis zum Leiter, zu erhalten. Die Kabel weisen normalerweise einen konstanten geometrischen Aufbau auf. Die Daten über die Wärmeleitfähigkeit, die Wärmeübergänge und die erforderlichen Wärmemengen zur Aufheizung für Isolations- und Leitermaterial sind bekannt und unterliegen praktisch keinen Schwankungen.

Wie bereits erwähnt, gibt es für eine bestehende Vernetzungsanlage und ein vorgegebenes Kabel ein theoretisch ideales Temperaturprofil bezüglich der einzelnen Heizzonen. Diesem Temperaturprofil entsprechen bei Berücksichtigung der Vorschubgeschwindigkeit auch bestimmte Oberflächentemperaturen

- 5 -

des Kabels. Mithin läßt sich durch Messung der Oberflächentemperatur feststellen, ob die gewünschte Aufheizung des Kabels in der betreffenden Heizzone wirklich erreicht wurde, unabhängig davon, wieviel Energie von der zugeordneten Heizquelle auf die Heizzone tatsächlich übertragen worden ist. Weicht mithin der gemessene Oberflächentemperaturwert vom Sollwert ab, wird die Zufuhr von Wärmeenergie zur Heizzone entsprechend verändert. Liegt der gemessene Oberflächentemperaturwert unterhalb einer Solltemperatur, erfolgt dementsprechend eine verstärkte Wärmezufuhr zur Heizzone.

Mit Hilfe der erfindungsgemäßen Vorrichtung läßt sich jedoch nicht nur die Temperatur der betreffenden Heizzone in gewünschtem Maße regeln, vielmehr lassen sich auch aus der Temperaturmessung in einer bestimmten Heizzone Rückschlüsse auf die Einstellung des gewünschten Temperaturprofils in den nachfolgenden Heizzonen ziehen. Wie bereits bekannt, können die einzelnen Heizzonen durch ein vorgegebenes Rechnerprogramm nach einem vorgegebenen Temperaturprofil beheizt werden. Dieses Rechnerprogramm läßt sich aufgrund des gemessenen Temperaturwertes modifizieren, so daß in den nachfolgenden Heizzonen ein modifiziertes Temperaturprofil vorgegeben wird - dies jedoch ohne eine Rückmeldung.

Nach einer Ausgestaltung der Erfindung ist vorgesehen, daß die Temperaturmeßvorrichtung der in Vorschubrichtung gesehen vorderen Heizzone bzw. der zweiten Heizzone zugeordnet ist.

Es wurde bereits erwähnt, daß angestrebt wird, daß die gewünschte Vernetzungstemperatur in der Kettenlinie möglichst schnell erreicht wird. Durch die Zuordnung der Temperaturmeßvorrichtung zur ersten Heizzone kann dieses Ziel erreicht werden. Der vorderen Heizzone kann maximale Energie zugeführt werden, ohne daß die Gefahr eines Überschwingens der Temperatur befürchtet werden muß. Eine zu starke Aufheizung der Isolation muß verhindert werden, wie ebenfalls eingangs erwähnt.

Nach einer anderen Ausgestaltung der Erfindung ist vorgesehen, daß der Regler zur Veränderung der Vorschubgeschwindigkeit auch ein Stellsignal auf die Vorschubvorrichtung gibt, wenn die Oberflächentemperatur von einer vorgegebenen Solltemperatur abweicht. Naturgemäß wird angestrebt, ein zu vernetzendes Kabel so schnell wie möglich durch die Vernetzungsstrecke zu schicken. Ist die Produktionsgeschwindigkeit jedoch zu hoch, wird die Vernetzungstemperatur zu spät erreicht und die Vernetzungszeit ist zu gering, um eine optimale Vernetzung zu gewährleisten. Andererseits kann eine zu geringe Produktionsgeschwindigkeit die Vernetzungszeit unerwünscht verlängern. Die Temperaturmessung im Eingangsbereich der Vernetzungsstrecke läßt daher auch einen Rückschluß auf die günstigste Vorschubgeschwindigkeit zu. Daher kann durch Temperaturmessung eine Regelung der Vorschubgeschwindigkeit erfolgen. Es versteht sich, daß bei Berechnung eines Temperaturprofils in Arbeitsrichtung hinter der Temperaturmeßstelle eine Änderung der Vor-

schubgeschwindigkeit auch eine Änderung des Temperaturprofils
zur Folge hat, so daß die Vorschubgeschwindigkeit bei der Errechnung des Temperaturprofils berücksichtigt werden muß.

Nach einer weiteren Ausgestaltung der Erfindung ist vorgesehen,
daß zwei verschiedenen Heizzonen eine Temperaturmeßvorrichtung
zugeordnet ist und jeweils einer Temperaturmeßvorrichtung eine
Gruppe zusammenhängender Heizzonen über den Regler zugeordnet
ist. Während bei einer einzigen Temperaturmeßvorrichtung lediglich die Temperatur in einer Heizzone exakt eingestellt werden
kann, während die nachfolgenden Heizzonen in ihrem Temperaturprofil rechnerisch angenähert werden, ermöglicht der
Einsatz von zwei oder mehr Temperaturmeßvorrichtungen eine
verbesserte Einstellung der vorgegebenen Temperaturen über
einen Regelvorgang. Unter Berücksichtigung der Vorschubgeschwindigkeit kann ein vorgegebener Vernetzungsgrad erreicht
werden. Bei voller Ausnutzung der vorhandenen Vernetzungskapazität kann daher die Anlagengeschwindigkeit automatisch
auf einen maximalen Wert gesteuert werden.

Die Vernetzung erfolgt bekanntlich in einem abgeschlossenen
Raum, in dem sich inertes Gas, insbesondere Stickstoff, unter
stark erhöhtem Druck befindet. Es ist daher verhältnismäßig
schwierig, die Oberflächentemperatur des Kabels zu bestimmen.
Eine Ausgestaltung der Erfindung sieht hierzu vor, daß die
Temperaturmeßvorrichtung die Oberflächentemperatur berührungs-

- 8 -

los mißt. In einigen Frequenzbereichen, zum Beispiel um 3,5 $\mu$m, wirken Isolationsmaterialien wie schwarze Körper, d.h. sie emittieren praktisch alle Energie dieses Frequenzbereiches. Für PVC und PE beträgt der Emissionsfaktor für diesen Infrarotbereich 96%. Ein Meßgerät, das diese Strahlung empfängt, kann daher eine genaue Temperaturmessung durchführen. Nach einer Ausgestaltung der Erfindung ist hierzu vorgesehen, daß die Temperaturmeßvorrichtung einen Infrarotdetektor enthält, der im Strahlengang einer optischen Anordnung liegt, die über eine Öffnung im Heizzonenrohr auf die Oberfläche des Kabels ausgerichtet ist.

Da der Druck des Stickstoffs in der Vernetzungsstrecke bis zu 20 bar betragen kann, sieht eine Ausgestaltung der Erfindung vor, daß ein Stutzen am Heizzonenrohr angeordnet ist, der mit dem Rohrinneren verbindbar ist und der am freien Ende druckdicht ein Sichtglas hält, dem die optische Anordnung nachgeordnet ist. Ein Sichtglas aus $CaF_2$-Glas ist besonders vorteilhaft, da es für den Infrarotbereich eine gute Durchlässigkeit aufweist und sich ferner durch ausreichende Temperatur- und Druckfestigkeit auszeichnet.

Wegen der möglichen Erwärmung des Sichtglases und auch der Aufheizung der Inertgasatmosphäre über die Temperatur des Kabels hinaus muß Sorge dafür getragen werden, daß eine Verfälschung der Meßwerte durch diese Faktoren nicht eintritt.

- 9 -

Auch kann es geschehen, daß das Sichtglas durch freigewordene Spaltprodukte verschmutzt und dadurch zu einer Beeinträchtigung der Messung führt. Eine Ausgestaltung der Erfindung sieht daher vor, daß zwischen Sichtglas und Öffnung des Heizzonenrohres ein verstellbarer Schieber angeordnet ist und der Raum zwischen Schieber und Sichtglas über einen Gasanschluß am Stutzen mit der Inertgasquelle in Verbindung steht und der Druck am Gasanschluß höher als im Heizrohr ist. Das Inertgas, zum Beispiel Stickstoff, wird dabei auf einer Temperatur gehalten, die entschieden niedriger ist als die Temperatur in der Heizzone. Der Schieber wird nur geöffnet, wenn eine Temperaturmessung stattfinden soll. Durch die Zuführung von sauberem Kühlstickstoff mit einem Druck oberhalb des Stickstoffdruckes in der Vernetzungsstrecke bleibt das Sichtglas sauber und kühl. Der Gasverbrauch ist unverheblich, da der Schieber nur kurzzeitig für eine Messung geöffnet wird. Nach einer weiteren Ausgestaltung der Erfindung ist vorgesehen, daß auf der dem Sichtglas zugewandten Seite des Schiebers eine Referenz-Strahlungsquelle angeordnet ist. Die Strahlungsleistung der Referenz-Strahlungsquelle wird vom Infrarotdetektor bei geschlossenem Schieber laufend gemessen. Dadurch kann die Funktionstüchtigkeit des Detektors und die Strahlungsdurchlässigkeit des Sichtglases kontrolliert und - in gewissen Grenzen - korrigiert werden.

Ein Ausführungsbeispiel der Erfindung wird nachfolgend anhand von Zeichnungen näher erläutert.

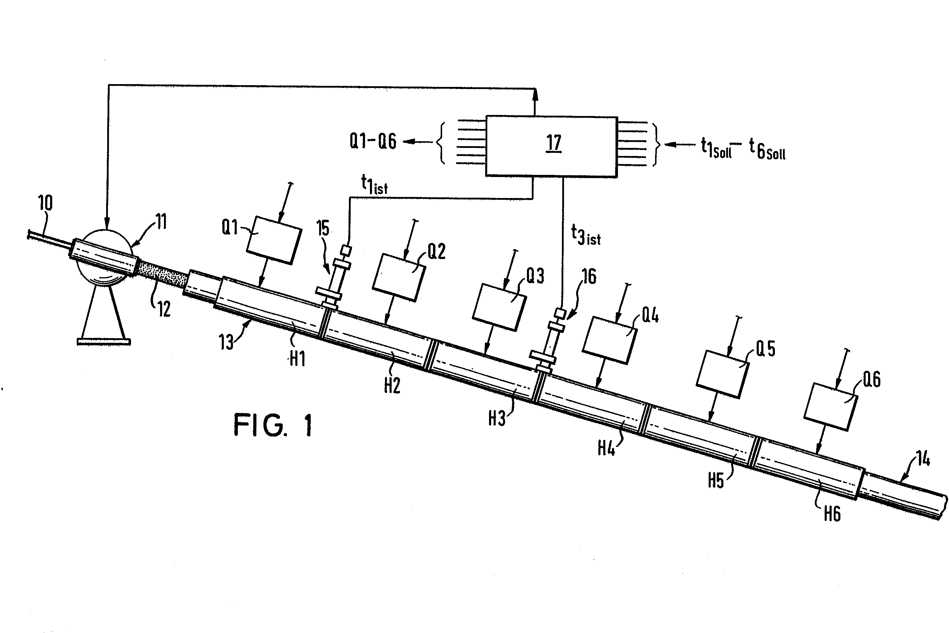

Fig. 1 zeigt äußerst schematisch eine Vorrichtung nach der
Erfindung.

Fig. 2 zeigt den Schnitt durch eine Temperaturmeßvorrichtung
für eine Vorrichtung nach der Erfindung.

Fig. 3 zeigt ein Temperaturdiagramm in der Vernetzungsstrecke
einer Vorrichtung nach der Erfindung.

Bevor auf die in den Zeichnungen dargestellten Einzelheiten
näher eingegangen wird, sei vorangestellt, daß jedes der beschriebenen und gezeigten Merkmale für sich oder in Verbindung
mit Merkmalen der Ansprüche von erfindungswesentlicher Bedeutung ist.

Ein metallischer Leiter 10 wird in einer Extrudiervorrichtung
11 mit einer Kunststoffisolation überzogen. Ein Kabel 12 mit
unvernetztem Isolationsmantel wird einer Kettenlinie 13 zugeführt, welche in sechs Heizzonen H1 bis H6 unterteilt ist. Die
Kettenlinie stellt quasi ein langes Rohr dar, in dem inertes
Gas, vorzugsweise Stickstoff unter Druck, bis zu 20 bar, eingefüllt ist. An die Vernetzungsstrecke 13 schließt sich eine
Kühlstrecke 14 an. Das Rohr der Vernetzungsstrecke 13 wird
normalerweise elektrisch beheizt, wobei das Rohr als Wärmestrahler wirkt und zu einer Aufheizung des Kabels führt. Den einzelnen Heizzonen H1 bis H6 sind jeweils unabhängige Wärmequellen zugeordnet, die mit Q1 bis Q6 bezeichnet sind.

Am Ende der ersten Heizzone H1 ist eine Temperaturmeßvorrichtung 15 angeordnet. Eine weitere Temperaturmeßvorrichtung 16 befindet sich am Ende der Heizzone 3. Die Temperaturmeßsignale der Meßvorrichtungen 15 und 16 gehen auf eine Steueranordnung 17, welche einen Rechner sowie einen Regler enthält.

Bei gegebener Produktionsgeschwindigkeit und gegebenem Isolationsmaterial und auch gegebenen Abmessungen und gegebenem Leitermaterial läßt sich vorher rechnerisch ein Temperaturprofil in der Vernetzungsstrecke ermitteln, welches eine optimale Vernetzung sicherstellt.

Die Solltemperaturen, die durch Oberflächentemperaturen des Kabels ausgedrückt werden können, sind durch $t_{1soll}$ bis $t_{6soll}$ bezeichnet. Sie sind lediglich zu Darstellungszwecken zeichnerisch herausgestellt. Sie können auch innerhalb der Steueranordnung 17 eingestellt bzw. rechnerisch ermittelt werden, je nach den vorgegebenen erwähnten Parametern. Die Temperaturmeßvorrichtungen 15 und 16 ermitteln die Oberflächentemperatur der Isolation im Bereich der Meßvorrichtungen und melden sie als Isttemperaturen der Steueranordnung 17. Weicht die gemessene Oberflächentemperatur von der Solltemperatur ab, wird ein Stellsignal auf die zugeordnete Wärmequelle, hier Q1 bzw. Q3 gegeben zwecks Änderung der Wärmezufuhr in der zugeordneten Heizzone H1 bzw. H3. Gleichzeitig errechnet der in der Steueranordnung 17 vorhandene Rechner, um welche Beträge die Wärmezufuhr durch die Wärmequellen Q2 und Q3 bzw. von Q4 bis Q6 geändert werden muß, um das vorgegebene Temperaturprofil tatsächlich zu erhalten.

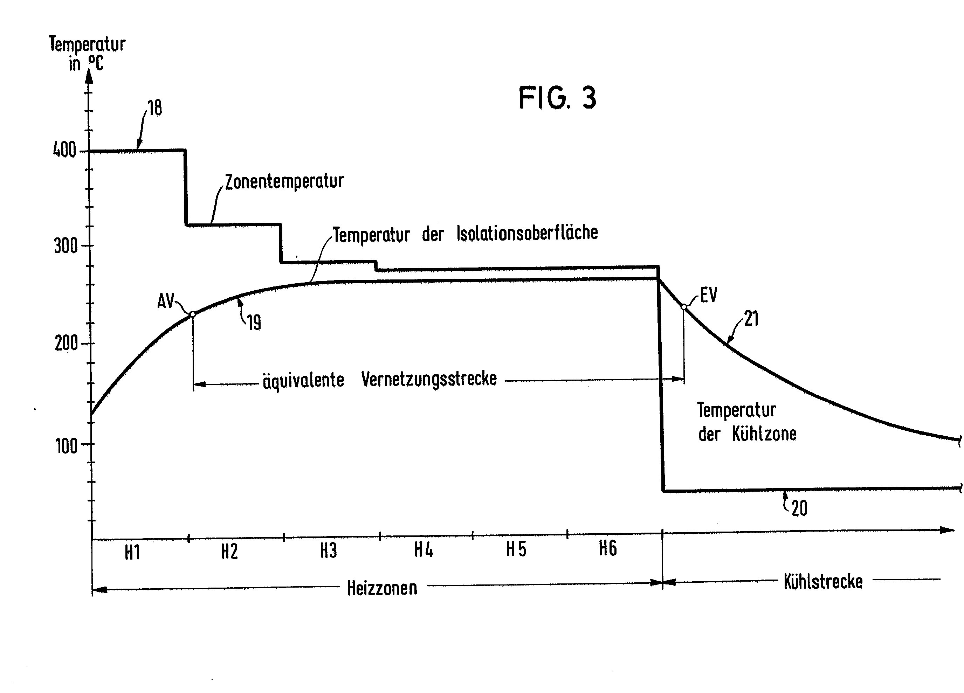

In Fig. 3 ist die Temperatur über die einzelnen Heizzonen H1 bis H6 aufgetragen. Mit 18 ist der Temperaturverlauf bzw. das Temperaturprofil in den einzelnen Heizzonen wiedergegeben. Mit 19 ist eine Temperaturkurve bezeichnet, die den Verlauf der Oberflächentemperatur bei dem Temperaturprofil 18 wiedergibt. Mit 20 ist der Temperaturverlauf der Kühlzone 14 bezeichnet und mit 21 der Verlauf der Temperatur der Isolationsoberfläche in der Kühlzone. Zwischen den Punkten AV und EV der Kurve 19 befindet sich die äquivalente Vernetzungsstrecke, in der eine Vernetzung des Isolationsmaterials tatsächlich stattfindet. Wesentlich ist, daß der Punkt AV, die Temperatur, bei der die Vernetzung beginnt, möglichst rasch erreicht wird. Wesentlich ist ferner, daß nach Erreichen dieses Punktes die Temperatur einen vorgegebenen Wert nicht überschreitet und mit dem optimalen Wert bis in die letzte Heizzone konstant bleibt.

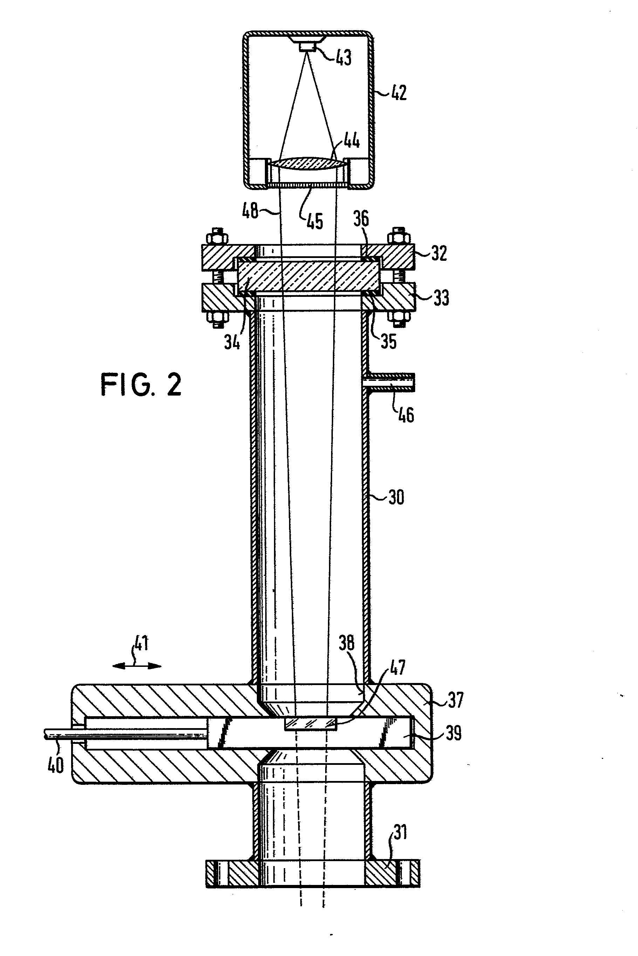

In Fig. 2 ist eine Temperaturmeßvorrichtung dargestellt, wie sie im Fall der Temperaturmeßvorrichtung 15 bzw. 16 eingesetzt werden kann. Ein Meßrohr 30 wird mit Hilfe eines Flansches 31 am Rohr der Kettenlinie befestigt. Das Rohr ist dabei mit einer Öffnung des nicht gezeigten Rohrs der Kettenlinie ausgerichtet. Am anderen Ende des Rohres 30 ist mit Hilfe von zwei Flanschen 32 bzw. 33 ein Sichtglas 34 eingespannt, das zum Beispiel aus $CaF_2$-Glas besteht. Dichtungen 35, 36 sorgen für eine luftdichte Abdichtung des Inneren des Rohres 30 gegenüber Atmosphäre.

Im unteren Bereich des Rohrs 30 ist ein Gehäuse 37 quer zur Längsachse des Rohrs 30 angeordnet, das einen eingeschnürten Durchgang 38 aufweist, der konzentrisch zum Inneren des Rohres 30 ist. Im Gehäuse 37 ist ein Schieber 39 dichtend angeordnet, der über eine aus dem Gehäuse 37 herausgeführte Stange 40 betätigbar ist, und zwar in Richtung des Doppelpfeils 41. In der in Fig. 2 dargestellten Stellung schließt der Schieber 39 den oberen Teil des Rohres vom unteren ab. Bei geöffnetem Schieber 39 ist ein freier Durchgang geschaffen, so daß auch der obere Teil des Rohres 30 mit dem Innern des nicht gezeigten Rohrs der Vernetzungsanlage in Verbindung steht.

In einem Meßgehäuse 42 ist ein Infrarotdetektor 43 angeordnet, der im Strahlengang 43 einer optischen Anordnung liegt, welche von einer Sammellinse 44 und einem Infrarotfilter 45 gebildet

- 14 -

ist. Ein Brennpunkt der Sammellinse 44 liegt im Bereich der Oberfläche des zu vernetzenden Kabels. Wird der Schieber 39 in Öffnungsstellung gebracht, läßt sich daher mit Hilfe des Infrarotdetektors 43 die Oberflächentemperatur der Isolation messen.

Am oberen Bereich des Rohrs 30 ist ein Anschlußstutzen 46 für Stickstoff vorgesehen. Über den Stutzen 46 wird Stickstoff mit höherem Druck als in der Vernetzungsstrecke und auch mit niedrigerer Temperatur eingeführt. Daher befindet sich im Rohr 30 stets saubere Atmosphäre von einer Temperatur, die niedriger ist als die Temperatur in der Vernetzungsstrecke, so daß eine Verfälschung der Meßergebnisse durch hohe Gastemperaturen bzw. eine Verschmutzung des Sichtglases 34 aus-geschlossen wird.

A n s p r ü c h e :

1. Vorrichtung zum Trockenvernetzen von Kabeln oder dergleichen,
   in der das Kabel nach dem Umpressen des Isolationsmaterials
   durch mehrere von getrennten Wärmequellen beheizbaren Heizzonen mittels einer Vorschubvorrichtung hindurchbewegt wird,
   die in einer länglichen rohrförmigen mit Inertgas gefüllten
   Atmosphäre gebildet sind und die Temperatur in den Heizzonen
   mittels einer Steueranordnung veränderbar ist, dadurch
   gekennzeichnet, daß mindestens einer Heizzone (H1, H3) eine
   Temperaturmeßvorrichtung (15, 16) zugeordnet ist, die die
   Oberflächentemperatur des Kabels mißt und die Steueranordnung
   (17) einen Regler enthält, der die Wärmezufuhr zur Heizzone
   (H1, H3) verändert, wenn die Oberflächentemperatur von
   einer vorgegebenen Solltemperatur abweicht.

2. Vorrichtung nach Anspruch 1, dadurch gekennzeichnet, daß
   die Temperaturmeßvorrichtung (15) der in Vorschubrichtung
   gesehen vorderen Heizzone (H1) bzw. der zweiten Heizzone
   zugeordnet ist.

3. Vorrichtung nach Anspruch 1 oder 2, dadurch gekennzeichnet,
   daß der Regler zur Veränderung der Vorschubgeschwindigkeit
   auch ein Stellsignal auf die Vorschubvorrichtung gibt, wenn
   die Oberflächentemperatur von einer vorgegebenen Solltemperatur abweicht.

4. Vorrichtung nach einem der Ansprüche 1 bis 3, dadurch gekennzeichnet, daß zwei verschiedenen Heizzonen eine Temperaturmeßvorrichtung (15, 16) zugeordnet ist und jeweils einer Temperaturmeßvorrichtung eine Gruppe zusammenhängender Heizzonen über den Regler zugeordnet ist.

5. Vorrichtung nach einem der Ansprüche 1 bis 4, dadurch gekennzeichnet, daß die Temperaturmeßvorrichtung (15, 16) die Oberflächentemperatur berührungslos mißt.

6. Vorrichtung nach einem der Ansprüche 1 bis 5, dadurch gekennzeichnet, daß die Temperaturmeßvorrichtung einen Infrarotdetektor (43) enthält, der im Strahlengang einer optischen Anordnung (44, 45) liegt, die über eine Öffnung im Heizzonenrohr auf die Oberfläche des Kabels ausgerichtet ist.

7. Vorrichtung nach Anspruch 6, dadurch gekennzeichnet, daß ein Stutzen (30) am Heizzonenrohr angebracht ist, der mit dem Rohrinneren in Verbindung ist und der am freien Ende druckdicht ein Sichtglas (34) hält, dem die optische Anordnung (44, 45) nachgeordnet ist.

8. Vorrichtung nach Anspruch 7, dadurch gekennzeichnet, daß das Sichtglas $CaF_2$-Glas ist.

9. Vorrichtung nach Anspruch 7 oder 8, dadurch gekennzeichnet, daß zwischen Sichtglas (34) und Öffnung des Heizzonenrohres ein verstellbarer Schieber (39) angeordnet ist und der Raum zwischen Schieber (39) und Sichtglas (34) über einen Gasanschluß (46) mit der Inertgasatmosphäre in Verbindung steht und der Druck am Gasanschluß (46) höher als im Heizzonenrohr ist.

10. Vorrichtung nach Anspruch 9, dadurch gekennzeichnet, daß auf der dem Sichtglas (34) zugewandten Seite des Schiebers (39) eine Referenzstrahlungsquelle (47) angebracht ist.

FIG. 1

FIG. 2

FIG. 3

Temperatur in °C

400 — 18

Zonentemperatur

300 — Temperatur der Isolationsoberfläche

AV — 19

200 — äquivalente Vernetzungsstrecke — EV — 21

Temperatur der Kühlzone

100 — 20

H1  H2  H3  H4  H5  H6

Heizzonen — Kühlstrecke

C099993

| Europäisches Patentamt | **EUROPÄISCHER RECHERCHENBERICHT** | Nummer der Anmeldung |
|---|---|---|

## EINSCHLÄGIGE DOKUMENTE

EP 83106307.8

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | WO - A1 - 79/00 463 (ERICSSON) | | H 01 B 13/00 |
| X | * Fig. 1; Seite 4, Zeilen 21-25 * | 1,5 | B 29 H 5/28 |
| Y | * Fig. 1; Seite 4, Zeilen 21-25 * | 6-8 | G 01 J 5/02 |
| | -- | | |
| | DE - A1 - 2 627 254 (BODENSEE-WERK) | | |
| Y | * Fig. 3,4; Seite 7, Zeile 4 - Seite 10, Zeile 4; Seite 12, Zeile 7 - Seite 15, Zeile 2 * | 6-8 | |
| A | * Fig. 3,4; Seite 7, Zeile 4 - Seite 10, Zeile 4; Seite 12, Zeile 7 - Seite 15, Zeile 2 * | 9,10 | |
| | -- | | |
| A | US - A - 3 577 784 (KOVACIC) | 7,9 | |
| | * Fig. 2-4; Spalte 2, Zeilen 10-73 * | | |
| | -- | | |
| A | US - A - 4 121 459 (MA CALL et al.) | 5,6,8 | |
| | * Fig. 2,4; Spalte 4, Zeilen 14-62 * | | |
| | -- | | |
| A | DE - A1 - 2 826 857 (SCHOLZ) | 1 | |
| | ---- | | |

| RECHERCHIERTE SACHGEBIETE (Int. Cl. ³) |
|---|
| H 01 B 13/00 |
| B 29 H 5/00 |
| G 01 J 5/00 |

Der vorliegende Recherchenbericht wurde für alle Patentansprüche erstellt.

| Recherchenort | Abschlußdatum der Recherche | Prüfer |
|---|---|---|
| WIEN | 11-10-1983 | KUTZELNIGG |

**KATEGORIE DER GENANNTEN DOKUMENTEN**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes Dokument

EPA Form 1503. 03.82